# EUROPÄISCHE PATENTSCHRIFT

(11) **EP 2 654 996 B1**
(45) Veröffentlichungstag und Bekanntmachung des Hinweises auf die Patenterteilung: **04.03.2015**
(21) Anmeldenummer: 11807864.1
(22) Anmeldetag: 20.12.2011
(51) Int. Cl.: B23B 31/26

(54) **SPANNEINRICHTUNG FÜR WERKZEUGE MIT HOHLSCHAFTKEGEL**
CLAMPING DEVICE FOR TOOLS WITH TAPERED HOLLOW SHAFT
SYSTEME DE SERRAGE D'OUTIL AVEC TIGE CREUSE CONIQUE

(30) Priorität: 22.12.2010 DE 102010056127
(43) Veröffentlichungstag der Anmeldung: 30.10.2013
(73) Patentinhaber: MAPAL Fabrik für Präzisionswerkzeuge Dr. Kress KG, 73431 Aalen (DE)
(72) Erfinder: KRESS, Dieter, 73431 Aalen (DE)
(74) Vertreter: Gleiss, Alf-Olav
(86) Internationale Anmeldenummer: PCT/EP2011/006422
(87) Internationale Veröffentlichungsnummer: WO 2012/084189

(56) Entgegenhaltungen:
- DE-A1-102005 015 787
- DE-U1- 20 101 469

## Beschreibung

Die Erfindung betrifft eine Spanneinrichtung für Werkzeuge mit Hohlschaftkegel gemäß Oberbegriff des Anspruchs 1, sowie eine Werkzeugaufnahme für einen Hohlschaftkegel aufweisende Werkzeuge gemäß Oberbegriff des Anspruchs 15 (siehe, z.B, DE-102005015787).

Spanneinrichtungen und Werkzeugaufnahmen der hier angesprochenen Art sind bekannt. Die Spanneinrichtungen, die Teil einer Werkzeugaufnahme sind, weisen eine Mittelachse und eine Spannvorrichtung auf, die im Wesentlichen zwei Funktionsstellungen einnehmen kann: In einer ersten Funktionsstellung ist die Spannvorrichtung derart radial in Richtung auf die Mittelachse hin angeordnet, dass sie - wenn ein Hohlschaftkegel in die Spanneinrichtung eingesetzt ist - nicht mit dem in der Spanneinrichtung eingesetzten Hohlschaftkegel in Eingriff kommt. In der zweiten Funktionsstellung ist die Spannvorrichtung zumindest bereichsweise derart radial von der Mittelachse wegverlagert, dass - wenn ein Hohlschaftkegel in die Spanneinrichtung eingesetzt ist - der Hohlschaftkegel durch die Spanneinrichtung eingespannt wird. Es ist eine Betätigungsvorrichtung vorgesehen, die in Richtung der Mittelachse, also in axialer Richtung, verlagerbar ist, wobei sie mit der Spannvorrichtung zusammenwirkt, sodass diese von ihrer ersten in ihre zweite Funktionsstellung verlagert werden kann. Außerdem umfassen bekannte Spanneinrichtungen einen Spanndom, der die Spannvorrichtung bei deren Verlagerung von ihrer ersten in ihre zweite Funktionsstellung zumindest bereichsweise führt. Bei bekannten Spanneinrichtungen ist die Betätigungsvorrichtung mit dem Spanndorn identisch. Sie weisen eine Zugstange auf, die in axialer Richtung verlagerbar ist, um die Spannvorrichtung von ihrer ersten in ihre zweite Funktionsstellung zu verlagern, und die diese zugleich bei ihrer Verlagerung führt. Die Zugstange dient also sowohl als Betätigungsvorrichtung als auch als Spanndorn. Insbesondere stützt sich die Spannvorrichtung in ihrer zweiten Funktionsstellung an der Zugstange ab. Wird mit dem in die Spanneinrichtung eingesetzten Werkzeug ein Werkstück bearbeitet, können radiale Kräfte auftreten, die senkrecht auf der Mittelachse der Spanneinrichtung stehen. Diese Kräfte müssen von der Spanneinrichtung aufgenommen werden, damit das Werkzeug sicher und fest gespannt bleibt. Insbesondere darf die Spannkraft auch dann nicht nachlassen, wenn starke radiale Kräfte auf das Werkzeug einwirken. Die aus dem Stand der Technik bekannten Spanneinrichtungen und Werkzeugaufnahmen haben den Nachteil, dass radiale Kräfte, die über eine innen liegende, umlaufende Spannschulter des Hohlschaftkegels in die Spannvorrichtung eingeleitet werden, von der Zugstange abgestützt werden müssen. Diese ist jedoch ein bewegliches Teil, weil sie als Betätigungsvorrichtung der Spanneinrichtung dient. Insbesondere bei dynamischer Belastung durch wechselnde radiale Kräfte kann eine Lockerung der Zugstange auftreten, wobei die Spannung des Werkzeugs nachlässt.

Der Erfindung liegt daher die Aufgabe zugrunde, den Kraftfluss in einer Spanneinrichtung und damit auch in einer Werkzeugaufnahme zu verbessern, sodass selbst bei starken radialen Kräften und dynamischer Belastung ein eingespanntes Werkzeug sicher und fest gespannt bleibt, ohne dass die Spannkraft während der Bearbeitung eines Werkstücks nachlässt.

Die Aufgabe wird gelöst, indem eine Spanneinrichtung mit den Merkmalen des Anspruchs 1 geschaffen wird. Diese zeichnet sich dadurch aus, dass der Spanndorn in Richtung der Mittelachse fixiert ist, sodass die Betätigungsvorrichtung relativ zu dem Spanndorn axial verlagerbar ist. Die Funktion der Betätigungsvorrichtung und des Spanndoms wird also nun nicht mehr von einer Zugstange übernommen, die quasi beide Elemente realisiert, sondern der Spanndorn und die Betätigungsvorrichtung sind als separate Elemente vorgesehen, wobei die Betätigungsvorrichtung eine Verlagerung der Spannvorrichtung von ihrer ersten in ihre zweite Funktionsstellung bewirkt, und wobei der Spanndorn die Spannvorrichtung bei ihrer Verlagerung zumindest bereichsweise führt. Die Spannvorrichtung stützt sich insbesondere in ihrer zweiten Funktionsstellung an dem Spanndorn ab. In die Spannvorrichtung eingeleitete radiale Kräfte werden im Wesentlichen über den Spanndorn abgestützt, der selbst kein bewegliches Teil ist. Wenn überhaupt, so wird nur ein sehr geringer Anteil der Radialkräfte in die Betätigungsvorrichtung eingeleitet, sodass jedenfalls der Hauptteil der auftretenden Radialkräfte von dem starren, fixierten Spanndorn aufgenommen wird. Demnach führt auch eine Belastung mit starken radialen Kräften und selbst eine dynamische Belastung nicht zu einer Lockerung des Werkzeugs beziehungsweise zu einem Nachlassen der Spannkraft. Bevorzugt ist die Spanneinrichtung Teil einer Werkzeugaufnahme.

Es wird eine Spanneinrichtung bevorzugt, bei der der Spanndorn einen ersten Anschlag aufweist, an dem die Spannvorrichtung bei ihrer Verlagerung gleitet. Die Spannvorrichtung stützt sich dabei an dem ersten Anschlag ab, wobei hier Kräfte, insbesondere auf ein Werkzeug bei der Bearbeitung eines Werkstücks wirkende radiale Kräfte, in den Spanndorn eingeleitet werden können.

Ganz besonders bevorzugt wird in diesem Zusammenhang, dass sich die Spannvorrichtung in ihrer zweiten Funktionsstellung an dem ersten Anschlag abstützt. Auf diese Weise wird der Kraftfluss von der innen liegenden, umlaufenden Spannschulter des Hohlschaftkegels über die Spannvorrichtung in den Spanndorn optimal geschlossen, sodass radiale Kräfte sicher abgestützt werden und eine Lockerung beziehungsweise ein Nachlassen der Spannkraft während der Bearbeitung ausgeschlossen werden kann.

Bevorzugt wird eine Spanneinrichtung, bei der die Betätigungsvorrichtung so ausgebildet und/oder angeordnet ist, dass sie die Spannvorrichtung in deren zweite Funktionsstellung drängt, wenn sie in Richtung auf einen einzuspannenden Hohlschaftkegel hin verlagert wird. Während bei bekannten Spanneinrichtungen eine Zugstange in eine Werkzeugaufnahme hineingezogen wird, um einen Hohlschaftkegel zu spannen, zeichnet sich die hier vorgeschlagene Spanneinrichtung dadurch aus, dass die Betätigungsvorrichtung relativ zu dem feststehenden Spanndorn aus der Werkzeugaufnahme heraus, also auf den zu spannenden Hohlschaftkegel zugeschoben wird, um diesen einzuspannen. Diese konstruktive Ausbildung beziehungsweise Anordnung der Betätigungsvorrichtung bewirkt letztlich, dass radiale Kräfte im Wesentlichen an dem fixierten Spanndorn abgestützt werden und jedenfalls nicht zu einem Nachlassen der Spannkraft während der Bearbeitung eines Werkstücks führen.

Besonders bevorzugt wird eine Spanneinrichtung, bei der der Spanndorn einen zentralen Kanal aufweist, der mit einer Kühl-/Schmiermittelquelle in Fluidverbindung steht. Bekannte Spanneinrichtungen haben den Nachteil, dass eine zentrale Kühl-/Schmier mittelversorgung entweder mittels eines zusätzlichen Kühl-/Schmiermittelrohrs, welches in eine Zugstange eingeführt wird, oder über die bewegliche Zugstange selbst erfolgen muss. Eine Versorgung über ein zusätzliches Kühl-/Schmiermittetrohr ist konstruktiv aufwendig und erfordert ein zusätzliches Teil, wobei zugleich der zur Verfügung stehende Durchmesser für den Kühl-/Schmiermittelkanal aufgrund der sich addierenden Wandstärken der Zugstange und des Kühl-/Schmiermittelrohrs vergleichsweise klein ist. Eine Versorgung über die Zugstange selbst hat den Nachteil, dass eine fluiddichte Verbindung mit dem in die Spanneinrichtung eingesetzten Werkzeug nicht sicher gewährleistet werden kann, weil eine reproduzierbare Anlage der axial verlagerbaren Zugstange an dem Werkzeug kaum sichergestellt werden kann. Es sind auch Kühl-/Schmiermittelversorgungen in Spanneinrichtungen bekannt, bei denen keine axial wirkende Betätigungsvorrichtung vorgesehen ist, sondern eine zentrale Schraube, die in radialer Richtung angeordnet ist, um Spannbacken einer Spannvorrichtung zu verlagern. Gerade bei diesen Spanneinrichtungen kann jedoch nur ein sehr kleiner Durchmesser des Versorgungskanals vorgesehen werden, weil die Spannmimik mit den Spannbacken und der zentralen Schraube konstruktiv aufwendig ist, so dass wenig Raum für ein Kühl-/Schmiermittelrohr bleibt. Wird dagegen der Spanndorn der vorliegenden Spanneinrichtung mit einem zentralen Kanal versehen, kann dieser einen großen Durchmesser aufweisen, weil quasi ausschließlich die Wandstärke des Spanndorns konstruktiv zu berücksichtigen ist. Der Durchmesser des zentralen Kanals kann ohne Weiteres dem halben Durchmesser des Spanndoms entsprechen, oder sogar größer sein. Es muss insoweit nur sichergestellt werden, dass der Spanndorn stabil genug ist, um die in ihn eingeleiteten Kräfte sicher abzustützen. Zugleich wird eine reproduzierbare und dichte Fluidverbindung mit dem in die Spanneinrichtung eingesetzten Werkzeug ermöglicht, weil der Spanndorn-in axialer Richtung gesehen - nicht verlagerbar ist.

Zu diesem Zweck wird bevorzugt, dass der Spanndom einen zweiten Anschlag aufweist, mit dem ein eingespanntes Werkzeug fluiddicht in Eingriff bringbar ist, sodass eine Fluidverbindung von dem zentralen Kanal zu einem Kühl-/Schmiermittelkanal des Werkzeugs herstellbar ist. Weil der Spanndorn fixiert ist, ist eine reproduzierbare, fluiddichte Anlage des eingespannten Werkzeugs an dem zweiten Anschlag ohne Weiteres gewährleistet.

Weitere vorteilhafte Ausgestaltungen ergeben sich aus den Unteransprüchen.

Die Aufgabe wird auch dadurch gelöst, dass eine Werkzeugaufnahme mit den Merkmalen des Anspruchs 15 geschaffen wird. Diese zeichnet sich durch eine Spanneinrichtung nach einem der Ansprüche 1 bis 14 aus. Aufgrund des verbesserten Kraftflusses in der Spanneinrichtung ist auch der Kraftfluss in der Werkzeugaufnahme verbessert, so dass selbst bei starken radialen Kräften und dynamischer Belastung ein eingespanntes Werkzeug sicher und fest gespannt bleibt, ohne dass die Spannkraft während der Bearbeitung eines Werkstücks nachlässt.

Die Erfindung wird im Folgenden anhand der Zeichnung näher erläutert. Es zeigen:
- Figur 1: einen Längsschnitt durch eine Werkzeugaufnahme mit einer Spanneinrichtung mit eingespanntem Hohlschaftkegel;
- Figur 2: einen Längsschnitt durch die Werkzeugaufnahme gemäß Figur 1 mit gelöster Spanneinrichtung und ohne Hohlschaftkegel;
- Figur 3: eine Seitenansicht einer Werkzeugaufnahme mit einer Spanneinrichtung;
- Figur 4: eine Querschnittsansicht der Werkzeugaufnahme gemäß Figur 3;
- Figur 5: einen Längsschnitt durch die Werkzeugaufnahme gemäß Figur 3, und
- Figur 6: einen weiteren Längsschnitt durch die Werkzeugaufnahme gemäß Figur 3.

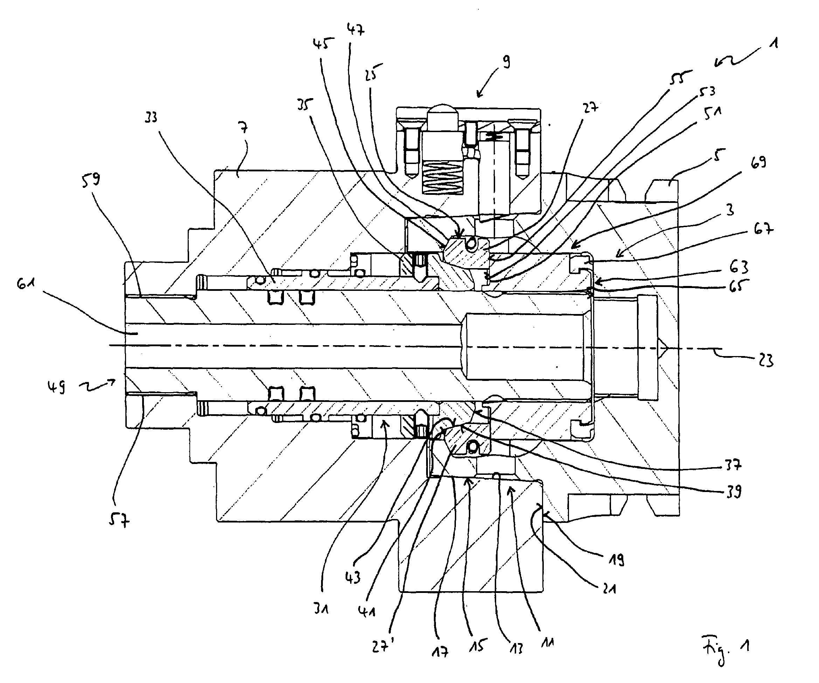

Figur 1 zeigt eine Werkzeugaufnahme 1 im Längsschnitt. Diese weist eine Spanneinrichtung 3 auf, mittels der ein Hohlschaftkegel 5 in einen Einbauflansch 7 eingespannt ist. Der Einbauflansch 7 ist bevorzugt in einer hier nicht dargestellten Maschinenspindel oder in einem Revolver einer Werkzeugmaschine oder eines Bearbeitungszentrums aufgenommen. Er kann auch in der Maschinenspindel oder dem Revolver einer Drehmaschine aufgenommen sein. Es ist auch möglich, dass der Hohlschaftkegel 5 mittels der Spanneinrichtung 3 direkt in einen Grundkörper der Werkzeugmaschine, des Bearbeitungszentrums oder der Drehmaschine, insbesondere deren Maschinenspindel oder deren Revolver eingespannt wird. Bei einem solchen Ausführungsbeispiel entfällt der Einbauflansch 7. Mit dem Hohlschaftkegel 5 ist ein hier nicht dargestelltes Werkzeug verbunden, welches der Bearbeitung eines ebenfalls nicht dargestellten Werkstücks dient. Dabei kann vorgesehen sein, dass das Werkzeug drehangetrieben ist, wobei dann bei dem hier dargestellten Ausführungsbeispiel der Einbauflansch 7 in einem drehangetriebenen Teil, beispielsweise einer Spindel, einer Werkzeugmaschine aufgenommen ist. Es ist aber auch möglich, dass das Werkzeug steht, wobei das Werkstück drehangetrieben ist. Jedenfalls wird bevorzugt, dass zur Bearbeitung eines Werkstücks mit dem Werkzeug eine Relativdrehung zwischen diesen Elementen bewirkt wird.

Bei dem dargestellten Ausführungsbeispiel ist der Hohlschaftkegel 5 in dem Einbauflansch 7 mittels einer Verriegelungsvorrichtung 9 gegen ein unbeabsichtigtes Herausgleiten gesichert, wenn die Spanneinrichtung 3 gelöst ist. Das Prinzip der Verriegelungsvorrichtung 9 ist allgemein bekannt, sodass hier nicht näher darauf eingegangen wird.

Zur Aufnahme des Hohlschaftkegels 5 weist der Einbauflansch 7 einen Aufnahmebereich 11 in Form einer konischen Ausnehmung auf, welcher eine konische Innenwandung 13 umfasst. Entsprechend weist der Hohlschaftkegel 5 einen konischen Vorsprung 15 auf, der eine konische Außenwandung 17 umfasst. Weiterhin weist der Einbauflansch 7 eine Auflagefläche 19 auf, die mit einer Anlagefläche 21 des Hohlschaftkegels 5 in eingespanntem Zustand zusammenwirkt.

Es ergibt sich ohne Weiteres, dass die hier für den Einbauflansch 7 beschriebenen Merkmale genauso an einem Grundkörper verwirklicht sind, wenn bei einem anderen Ausführungsbeispiel einer Werkzeugaufnahme kein Einbauflansch vorgesehen ist, sondern der Hohlschaftkegel 5 direkt in den Grundkörper eingesetzt wird.

Die Kegelwinkel des konischen Aufnahmebereichs 11 und des konischen Vorsprungs 15 sind so aufeinander abgestimmt, dass die Innenwandung 13 und die Außenwandung 17 im eingespannten Zustand des Hohlschaftkegels 5 flächig und satt aneinander anliegen. Dazu wird beim Einspannen die Außenwandung 17 des Vorsprungs 15 aufgeweitet, wobei zugleich der Hohlschaftkegel 5 in den Aufnahmebereich 11 hineingezogen wird, sodass die Anlagefläche 21 gegen die Auflagefläche 19 gepresst wird. Auf diese Weise ergibt sich eine geometrische Überbestimmung bezüglich der Anlage des Hohlschaftkegels 5 mit der Außenwandung 17 an der Innenwandung 13 einerseits, und der Anlage der Anlagefläche 21 an der Auflagefläche 19 andererseits. Letztlich wird eine definierte, sichere und feste Einspannung des Hohlschaftkegels 5 in dem Einbauflansch 7 bewirkt, sodass ein Werkzeug definiert und sicher in der Werkzeugaufnahme 1 gehalten ist. Das hier beschriebene Spannprinzip ist bekannt, sodass nicht weiter darauf eingegangen wird.

Die Spanneinrichtung 3 weist eine Mittelachse 23 auf. Weiterhin umfasst sie eine Spannvorrichtung 25. Bevorzugt weist diese mindestens zwei Spannsegmente auf, von denen hier ein erstes Spannsegment 27 und ein zweites Spannsegment 27' dargestellt sind. Insgesamt ist die Spannvorrichtung 25 bevorzugt als - in Umfangsrichtung gesehen - in Spannsegmente 27, 27' unterteilter Spannring ausgebildet. Besonders bevorzugt umfasst sie drei Spannsegmente, es sind aber ohne Weiteres auch mehr Spannsegmente möglich. Es ist auch möglich, die Spannvorrichtung 25 als Spannhülse auszubilden, welche - in Umfangsrichtung gesehen - mehrere in axialer Richtung verlaufende Einschnitte aufweist, sodass Spannsegmente in Form von Zungen gebildet werden. Auch andere Ausgestaltungen einer Spannvorrichtung sind denkbar.

Wesentlich ist, dass die Spannvorrichtung eine erste und eine zweite Funktionsstellung einnehmen kann, wobei die Spanneinrichtung 3 in der ersten Funktionsstellung gelöst und in der zweiten gespannt ist. In Figur 1 ist die Spannvorrichtung 25 in ihrer zweiten Funktionsstellung dargestellt, in der die Spannsegmente 27, 27' derart radial von der Mittelachse 23 wegverlagert sind, dass der Hohlschaftkegel 5 eingespannt wird.

Zur Verlagerung der Spannsegmente 27, 27' ist eine Betätigungsvorrichtung 31 vorgesehen. Diese umfasst bei dem dargestellten Ausführungsbeispiel eine Schiebehülse 33 und einen Spannring 35. Es ist auch möglich, die Betätigungsvorrichtung 31 einstückig auszubilden. Bei dem dargestellten Ausführungsbeispiel ist der Spannring 35 mit Hilfe von Madenschrauben an der Schiebehülse 33 fixiert, sodass er gemeinsam mit dieser verlagert werden kann. Selbstverständlich sind auch andere Möglichkeiten denkbar, den Spannring 35 an der Schiebehülse 33 zu fixieren, beispielsweise können beide Elemente miteinander verschraubt, verpresst, verklebt, verlötet oder verschweißt werden.

Wesentlich ist, dass die Betätigungsvorrichtung 31 in Richtung der Mittelachse 23, also in axialer Richtung verlagerbar ist. Sie wirkt dabei derart mit der Spannvorrichtung 25 zusammen, dass diese von ihrer ersten in ihre zweite Funktionsstellung verlagert werden kann. Insbesondere ist die Betätigungsvorrichtung 31 selbst von einer ersten in eine zweite Funktionsstellung verlagerbar, wobei sie in ihrer ersten Funktionsstellung eine Verlagerung der Spannvorrichtung 25 in deren erste Funktionsstellung erlaubt, und in ihrer zweiten Funktionsstellung die Spannvorrichtung 25 in deren zweite Funktionsstellung drängt. In Figur 1 ist die Betätigungsvorrichtung 31 in ihrer zweiten Funktionsstellung dargestellt. Dabei drängt der Spannring 35 die Spannsegmente 27, 27' radial nach außen.

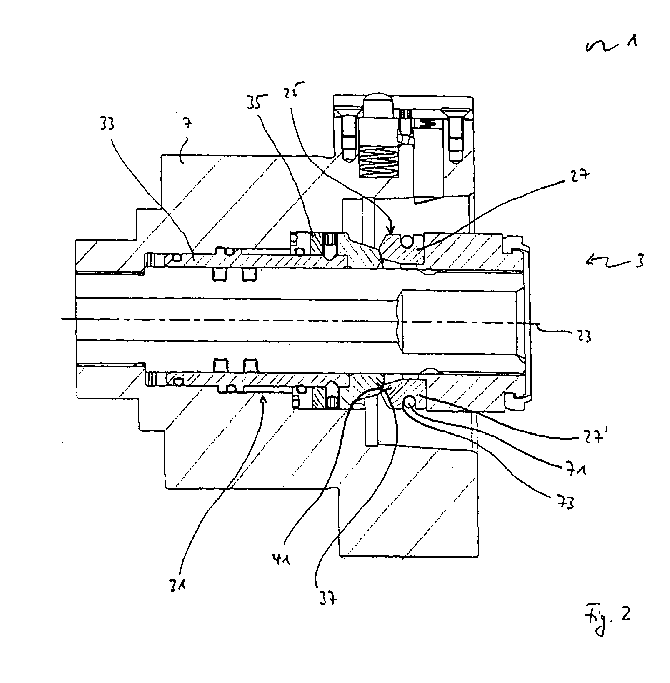

Die Betätigungsvorrichtung 31 wirkt bevorzugt mit der Spannvorrichtung im Sinne eines Keilgetriebes zusammen. Bei dem dargestellten Ausführungsbeispiel wirkt der Spannring 35 und damit die Betätigungsvorrichtung 31 mit den Spannsegmenten 27, 27' im Sinne eines zweistufigen Keilgetriebes zusammen. Hierzu weist sie - bevorzugt an dem Spannring 35 - eine erste Keilfläche 37 auf, die in hier nicht dargestellter Weise mit einer ersten Keilfläche 41 der Spannvorrichtung 25 zusammenwirkt. Sie weist außerdem - ebenfalls bevorzugt an dem Spannring 35 - eine zweite Keilfläche 39 auf, die mit einer zweiten Keilfläche 43 der Spannvorrichtung 25 zusammenwirkt. Unter Beachtung der hier im Wesentlichen vorliegenden Zylindersymmetrie weisen - in einem Koordinatensystem, in dem die Mittelachse 23 die Ordinate definiert, während eine beliebige, auf ihr senkrecht stehende Achse, die beispielsweise in der Bildebene von Figur 1 liegen kann, als Abszisse dient - die ersten Keilflächen 37, 41 eine geringere Steigung auf als die zweiten Keilflächen 39, 43. Wird also - ausgehend von dem in Figur 2 dargestellten gelösten Zustand der Spanneinrichtung 3 die Betätigungsvorrichtung 31 in Figur 2 oder Figur 1 nach rechts verlagert, gleiten die ersten Keilflächen 37, 41 aufeinander, wobei sich - in radialer Richtung gesehen - eine vergleichsweise starke Auswärtsbewegung der Spannsegmente 27, 27' in Abhängigkeit von der axialen Verlagerung des Spannrings 35 ergibt. Ab einer gewissen Verlagerung der Betätigungsvorrichtung 31 kommen dann die zweiten Keilflächen 39, 43 miteinander in Eingriff, wobei bei einer weiteren axialen Verlagerung des Spannrings 35 diese aufeinander gleiten. Aufgrund deren geringerer Steigung ergibt sich dabei - weiterhin bei einer Verlagerung des Spannrings 35 in den Figuren 1 und 2 nach rechts - eine geringere radiale Auswärtsbewegung der Spannsegmente 27, 27'. Zugleich kommt eine Spannfläche 45 der Spannvorrichtung 25 mit einer korrespondierenden innenliegenden und vorzugsweise umlaufenden Ringschulter 47 des Hohlschaftkegels 5 in Eingriff, wobei auch hier ein Keilgetriebe realisiert wird. Bei einer radialen Auswärtsbewegung der Spannsegmente 27, 27' gleitet also die Spannfläche 45 auf der Ringschulter 47, sodass der Hohlschaftkegel 5 mit seinem Vorsprung 15 in den Aufnahmebereich 11 hineingezogen wird. Dabei wird der Vorsprung 15 aufgeweitet, und es ergibt sich das oben beschriebene Spannprinzip mit der erwähnten geometrischen Überbestimmung.

Das zweistufige Keilgetriebe, welches die Betätigungsvorrichtung 31 bevorzugt mit der Spannvorrichtung 25 ausbildet, bewirkt, dass bei einer Verlagerung der Betätigungsvorrichtung 31 mit konstanter Geschwindigkeit die Phase der Verlagerung der Spannvorrichtung 25, in der die Spannsegmente 27, 27' noch nicht mit der Ringschulter 47 in Eingriff sind, relativ rasch erfolgt, während der eigentliche Spannvorgang, bei dem die Spannfläche 45 mit der Ringschulter 47 im Sinne eines Keilgetriebes zusammenwirkt, verzögert und damit definierter erfolgt. Da also bei dem eigentlichen Spannvorgang bei gleichem Verlagerungsweg der Betätigungsvorrichtung 31 ein geringerer Weg bezüglich der Verlagerung der Spannvorrichtung 25 radial nach außen zurückgelegt wird, ergibt sich hier eine bessere Verstärkung der über die Betätigungsvorrichtung 31 in die Spannvorrchtung 25 eingeleiteten Kraft. Das Keilgetriebe weist also in dieser Phase der Verlagerung der Spannvorrichtung 25 aufgrund des verkürzten Spannwegs eine größere Kraftverstärkung auf, als dies in der Phase der Verlagerung der Fall ist, in der die Spannsegmente 27, 27' noch nicht mit der Ringschulter 47 in Eingriff sind.

Die Spanneinrichtung 3 weist einen Spanndorn 49 auf. Dieser führt die Spannvorrichtung 25 bei deren Verlagerung von ihrer ersten Funktionsstellung in ihre zweite Funktionsstellung zumindest bereichsweise. Bei dem dargestellten Ausführungsbeispiel weist der Spanndorn 49 einen ersten Anschlag 51 auf, der hier als Gleitfläche 53 ausgebildet ist. Während der Verlagerung der Spannvorrichtung 25 von ihrer ersten in ihre zweite Funktionsstellung gleiten die Spannsegmente 27, 27' mit einer korrespondierenden Gleitfläche 55 an der Gleitfläche 53, sodass die Spannvorrichtung 25 hier geführt wird. Andernfalls würde die Betätigungsvorrichtung 31 die Spannvorrichtung 25 bei ihrer Verlagerung in Figur 1 nach rechts schieben. Der Anschlag 51 wirkt somit als Widerlager, welches die Spannvorrichtung 25 bereichsweise führt und damit eine radiale Auswärtsbewegung der Spannsegmente 27, 27' ermöglicht.

Der Spanndorn 49 ist in Richtung der Mittelachse 23 fixiert. Bevorzugt ist er in den Einbauflansch 7 oder einen entsprechenden Grundkörper eingeschraubt. Er weist hierzu ein Außengewinde 57 auf, das mit einem Innengewinde 59 des Einbauflanschs 7 oder des Grundkörpers kämmt. Es ist auch möglich, den Spanndorn 49 in den Einbauflansch 7 oder den Grundkörper einzupressen, ihn in diesem zu verschweißen, zu verkleben, zu verlöten oder ihn auf andere geeignete Weise mit dem Einbauflansch 7 oder dem Grundkörper zu verbinden. Wesentlich ist, dass der Spanndorn 49 in axialer Richtung, also in Richtung der Mittelachse 23, fixiert ist. Er ist also insbesondere axial nicht verlagerbar.

Die Betätigungsvorrichtung 31 ist relativ zu dem Spanndorn 49 axial verlagerbar. Vorzugsweise umgreift sie denselben. Bei dem dargestellten Ausführungsbeispiel sind die Schiebehülse 33 und der Spannring 35 zylindrisch ausgebildet, und sie umgreifen den ebenfalls zylindersymmetrischen Spanndorn 49.

Anhand von Figur 1 wird Folgendes deutlich: Treten bei der Bearbeitung eines Werkstücks mit einem mit dem Hohlschaftkegel 5 verbundenen Werkzeug radiale Kräfte auf, werden diese über die Ringschulter 47 in die Spannsegmente 27, 27' eingeleitet. Diese werden von dem Spanndorn 49 geführt, sodass die Kräfte im Wesentlichen in den Spanndorn 49 und damit in den Einbauflansch 7 oder den Grundkörper eingeleitet werden. Insbesondere stützen sich die Spannsegmente 27, 27' an dem Spanndorn 49, bevorzugt an dem ersten Anschlag 51 ab. Es ist dann ein ununterbrochener Kraftfluss von der Ringschulter 47 über die Spannsegmente 27, 27' und vorzugsweise den ersten Anschlag 51 in den Spanndorn 49 gewährleistet. Letztlich werden also die auftretenden Radialkräfte durch ein starres, axial nicht verlagerbares Element, nämlich den Spanndorn 49 aufgenommen und von diesem in den Einbauflansch 7 oder den Grundkörper abgeleitet. Nur ein sehr geringer, wenn nicht verschwindender Anteil der auftretenden Radialkräfte wirkt auf die Betätigungsvorrichtung 31. Selbst bei starken Radialkräften und auch bei dynamischer Belastung ist deswegen eine dauerhafte, feste Spannung des Hohlschaftkegels 5 durch die Spanneinrichtung 3 in der Werkzeugaufnahme 1 gewährleistet, eine Lockerung der Spanneinrichtung 3 ist quasi ausgeschlossen.

Aus Figur 1 wird noch Folgendes deutlich: Um den Hohlschaftkegel 5 zu spannen, drängt die Betätigungsvorrichtung 31 die Spannvorrichtung 25 nach außen, während sie in Richtung auf den in den Aufnahmebereich 11 eingesetzten Hohlschaftkegel 5 hin verlagert wird. Sie wird also quasi aus der Werkzeugaufnahme 1 während des Spannvorgangs herausgeschoben. Bei bekannten Spanneinrichtungen wird dagegen die als Zugstange ausgebildete Betätigungsvorrichtung, die zugleich als Spanndorn wirkt, in eine Werkzeugaufnahme hineingezogen, um die Spannung eines Hohlschaftskegels zu bewirken. Letztlich trägt dies wesentlich dazu bei, dass bei bekannten Spanneinrichtungen die Spannkraft aufgrund von radialen Kräften während der Bearbeitung eines Werkstücks nachlassen kann. Die radialen Kräfte greifen nämlich so an der Zugstange an, dass diese sie aus der Werkzeugaufnahme herausdrängen, also entgegen der Spannrichtung wirken. Dabei erfolgt keine effiziente Abstützung der entsprechenden Kräfte. Wesentlich bei der vorliegenden Spanneinrichtung ist, dass die Betätigungsvorrichtung 31 so angeordnet und/oder ausgebildet ist, dass sie zum Spannen des Hohlschaftkegels 5 aus der Werkzeugaufnahme 1 heraus auf den Hohlschaftkegel 5 zugeschoben wird. Dies trägt dazu bei, dass sich in die Spannvorrichtung 25 eingeleitete Radialkräfte im Wesentlichen über den Spanndorn 49 abstützen und nur in geringem Ausmaß oder gar nicht in die Betätigungsvorrichtung 31 eingeleitet werden, jedenfalls aber kein Nachlassen von deren Spannkraft bewirken.

Der Spanndorn 49 weist vorzugsweise einen zentralen Kanal 61 auf. Bei einem bevorzugten Ausführungsbeispiel dient dieser zur Durchführung einer Antriebswelle für ein angetriebenes Werkzeug. Besonders bevorzugt steht er jedoch mit einer Kühl-/Schmiermittelquelle der Werkzeugmaschine in Fluidverbindung. Es ist möglich, dass der zentrale Kanal 61 einen vergleichsweise großen Durchmesser aufweist. Dies ist sowohl vorteilhaft, wenn der Kanal 61 als Durchführung für eine Antriebswelle dient, als auch wenn er zur Versorgung eines Werkzeugs mit Kühl-/Schmiermittel vorgesehen ist. Bevorzugt beträgt ein Durchmesser d des Kanals 61 mindestens ein Drittel eines Durchmessers D des Spanndoms 49. Ganz besonders bevorzugt beträgt der Durchmesser d mindestens die Hälfte des Durchmessers D. Auch größere Verhältnisse der Durchmesser d zu D sind möglich. Der Durchmesser d kann entlang der Längserstreckung des zentralen Kanals 61 variieren. Bei dem dargestellten Ausführungsbeispiel ist in einem dem Aufnahmebereich 11 zugewandten Bereich eine Erweiterung des Kanals 61 vorgesehen. Eine Veränderung des Durchmessers des zentralen Kanals 61 kann beispielsweise dazu dienen, die Strömungsgeschwindigkeit eines Kühl-/Schmiermittels zu beeinflussen.

Besonders bevorzugt kann mit dem Spanndorn 49 ein Werkzeug fluiddicht in Eingriff gebracht werden, welches mindestens einen innen liegenden Kühl-/Schmiermittelkanal aufweist. Dazu ist an dem Spanndorn 49 vorzugsweise ein zweiter Anschlag 63 vorgesehen, mit dem ein eingespanntes Werkzeug fluiddicht in Eingriff bringbar ist. Dabei kann eine Fluidverbindung von dem zentralen Kanal 61 zu einem Kühl-/Schmiermittelkanal des Werkzeugs hergestellt werden. Insbesondere ist eine reproduzierbare Anlage einer Dichtfläche 65 des Hohlschaftkegels 5 an dem zweiten Anschlag 63 gewährleistet, weil der Spanndorn 49 in axialer Richtung fixiert ist. Dadurch ergibt sich bei jedem Einspannvorgang des Hohlschaftkegels 5 die gleiche reproduzierbare, dichte Anlage der Dichtfläche 65 an dem zweiten Anschlag 63.

Um hier die Dichtwirkung weiter zu erhöhen, weist der Spanndorn 49 bevorzugt im Bereich des zweiten Anschlags 63 eine Dichtung 67 auf, sodass eine dichte Übergabe des Kühl-/Schmiermittels von der Werkzeugmaschine zu dem Werkzeug über den zentralen Kanal 61 möglich ist.

Besonders bevorzugt weist der Spanndorn 49 einen radialen Vorsprung 69 auf, an dem der erste Anschlag 51 und der zweite Anschlag 63 vorgesehen sind. Es ist möglich, den Vorsprung 69 einstückig mit dem Spanndorn 49 auszubilden. Bei dem dargestellten Ausführungsbeispiel ist der Vorsprung 69 allerdings mit dem Spanndorn 49 verschraubt. Es ist auch möglich, den Vorsprung 69 auf den Spanndorn 49 zu pressen, oder ihn mit demselben zu verschweißen, zu verlöten oder zu verkleben. Letztlich sind auch andere geeignete Möglichkeiten denkbar, wie der Vorsprung 69 mit dem Spanndorn 49 verbunden werden kann, beispielsweise mittels Madenschrauben.

Figur 2 zeigt einen Längsschnitt durch die Werkzeugaufnahme 1 gemäß Figur 1 mit gelöster Spanneinrichtung 3 und ohne den Hohlschaftkegel 5. Gleiche und funktionsgleiche Elemente sind mit gleichen Bezugszeichen versehen, sodass insoweit auf die vorangegangene Beschreibung verwiesen wird. Zur besseren Übersichtlichkeit sind die Bezugszeichen allerdings nicht vollständig übernommen. Die Spannvorrichtung 25 ist hier in ihrer ersten Funktionsstellung dargestellt, in der sie derart radial in Richtung auf die Mittelachse 23 hin angeordnet ist, dass sie nicht mit einem in die Spanneinrichtung 3 eingesetzten Hohlschaftkegel in Eingriff kommt, wenn ein solcher in die Spanneinrichtung 3 eingesetzt ist.

Ebenso ist die Betätigungsvorrichtung 31 hier in ihrer ersten Funktionsstellung dargestellt, in der sie eine Verlagerung der Spannvorrichtung 25 in deren erste Funktionsstellung erlaubt. Dies bedeutet, dass die Betätigungsvorrichtung 31 in Figur 2 so weit nach links verlagert ist, dass die Spannsegmente 27, 27' sich so weit nach innen verlagern können, dass ein Hohlschaftkegel aus der Spanneinrichtung 3 beziehungsweise der Werkzeugaufnahme 1 entnehmbar oder in dieser einführbar ist. Mit der Spannvorrichtung 21 wirkt bevorzugt ein Rückstellelement 71 zusammen, welches eine Verlagerung der Spannvorrichtung 25 von ihrer zweiten in ihre erste Funktionsstellung bewirkt, wenn die Betätigungsvorrichtung 31 von ihrer zweiten in ihre erste Funktionsstellung verlagert wird. Das Rückstellelement 71 ist bei dem dargestellten Ausführungsbeispiel als elastischer Ring ausgebildet, der in einer - in Umfangsrichtung gesehen - umlaufenden Nut 73 der Spannvorrichtung 25 angeordnet ist. Dieser Ring ist so vorgespannt, dass er zumindest in der zweiten Funktionsstellung der Spannvorrichtung 25 eine radial nach innen wirkende Kraft auf diese ausübt, die sie in ihre erste Funktionsstellung drängt. Bevorzugt ist der Ring 73 so vorgespannt, dass er auch eine radial nach innen gerichtete Kraft auf die Spannvorrichtung 25 ausübt, wenn diese in ihrer ersten Funktionsstellung angeordnet ist.

Bei einem anderen bevorzugten Ausführungsbeispiel der Spanneinrichtung 3 ist es auch möglich, dass die Betätigungsvorrichtung 31 selbst eine Verlagerung der Spannvorrichtung 25 von deren zweiten in ihre erste Funktionsstellung bewirkt, sodass kein gesondertes Rückstellelement 71 vorgesehen sein muss.

Aus Figur 2 wird noch deutlich, dass ausgehend von der dort dargestellten ersten Funktionsstellung der Spannvorrichtung 25 und der Betätigungsvorrichtung 31 bei einer Verlagerung des Spannrings 35 in Figur 2 nach rechts zunächst die ersten Keilflächen 37, 41 aufeinander gleiten. Auf diese Weise wird eine vergleichsweise rasche Auswärtsbewegung der Spannsegmente 27, 27' bewirkt.

Die Betätigungsvorrichtung 31 kann durch ein Keil- oder Schraubgetriebe, elektrisch oder hydraulisch, maschinell oder manuell aktiviert werden. Es ist also möglich, dass ein Keil- oder Schraubgetriebe vorgesehen ist, welches manuell betätigt wird. Ein solches Getriebe kann auch elektrisch oder hydraulisch betätigt werden. Die Betätigungsvorrichtung 31 kann auch direkt ohne Vorschaltung eines Getriebes elektrisch oder hydraulisch aktiviert werden. Bezüglich aller denkbaren Aktivierungsmöglichkeiten ist eine maschinelle, bevorzugt automatische, oder manuelle Aktivierung möglich.

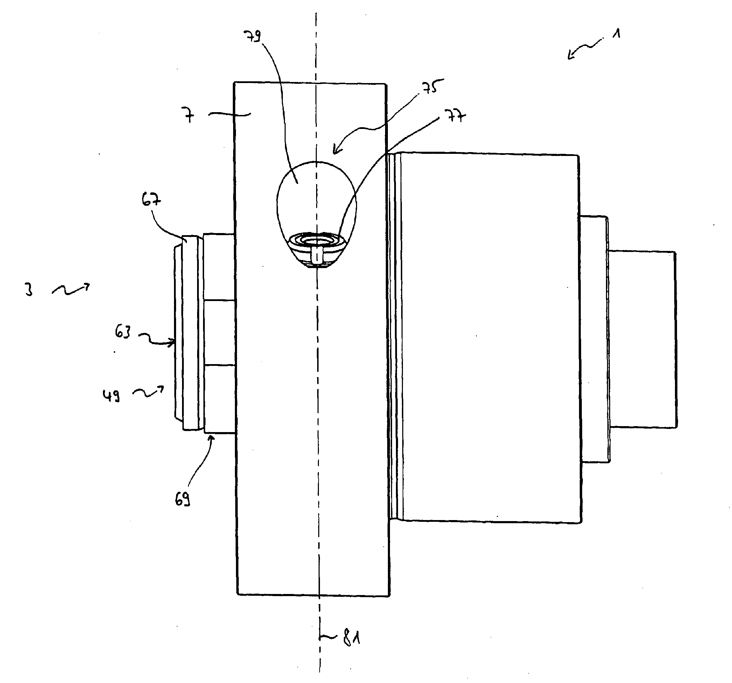

Figur 3 zeigt eine Seitenansicht einer Werkzeugaufnahme 1 mit einer Spanneinrichtung 3. Gleiche und funktionsgleiche Elemente sind mit gleichen Bezugszeichen versehen, sodass insoweit auf die vorangegangene Beschreibung verwiesen wird. In Figur 3 ist der Einbauflansch 7 dargestellt, aus dem der Spanndorn 49 der Spanneinrichtung 3 herausragt. Hiervon sind der Vorsprung 69, der zweite Anschlag 63 sowie die Dichtung 67 dargestellt.

Bei dem Ausführungsbeispiel gemäß Figur 3 ist eine Aktiviervorrichtung 75 vorgesehen. Diese ermöglicht hier eine hydraulische Aktivierung der Betätigungsvorrichtung 31, wobei die Aktivierung manuell erfolgt. Dazu sind bevorzugt Hydraulikschrauben vorgesehen, von denen hier eine Hydraulikschraube 77 dargestellt ist, die in einer Ausnehmung 79 des Einbauflanschs 7 angeordnet ist. In Figur 3 ist außerdem eine vertikale Linie 81 dargestellt.

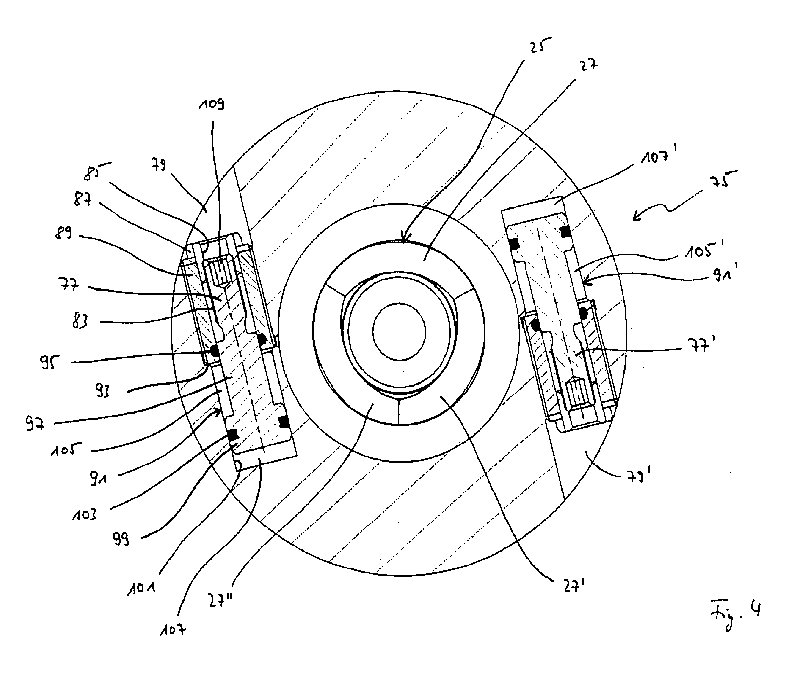

Figur 4 zeigt eine Querschnittsdarstellung der Werkzeugaufnahme 1 gemäß Figur 3, wobei die Schnittebene auf Höhe der in Figur 3 dargestellten Linie 81 angeordnet ist. Gleiche und funktionsgleiche Elemente sind mit gleichen Bezugszeichen versehen, sodass insoweit auf die vorangegangene Beschreibung verwiesen wird. Dargestellt ist vor allem die Spannvorrichtung 25, die hier drei Spannsegmente 27, 27' und 27" aufweist. Weiterhin ist in Figur 4 die Aktiviervorrichtung 75 dargestellt, die hier zwei Hydraulikschrauben 77, 77' aufweist. Diese sind jeweils in Ausnehmungen 79, 79' des Einbauflanschs 7 angeordnet.

Im Folgenden wird nur die Funktion der Hydraulikschraube 77 erläutert. Es ist offensichtlich, dass die Hydraulikschraube 77' dem gleichen Funktionsprinzip gehorcht, sodass alles, was hier in Zusammenhang mit der Hydraulikschraube 77 ausgeführt wird, ohne Weiteres auf die Hydraulikschraube 77' angewendet werden kann.

Bei dem dargestellten Ausführungsbeispiel weist die Hydraulikschraube 77 ein Außengewinde 83 auf, welches mit einem Innengewinde 85 einer Gewindehülse 87 kämmt. Die Gewindehülse 87 ist bevorzugt in einer Dichthülse 89 aufgenommen, die ihrerseits in der Bohrung 79 aufgenommen ist. Bei einem anderen Ausführungsbeispiel ist es möglich, die Gewindehülse 85 mit der Dichthülse 89 einstückig auszubilden. Es ist auch möglich, ein Innengewinde direkt an der Dichthülse 89 vorzusehen, mit dem ein entsprechendes Außengewinde der Hydraulikschraube 77 kämmt.

Die Dichthülse 89 kann in die Ausnehmung 79 eingeschraubt, eingepresst, eingeklebt, eingelötet oder auf sonstige Weise in dieser befestigt sein. Sie ist bevorzugt in einem Bereich der Ausnehmung 79 angeordnet, der einen größeren Durchmesser aufweist als ein sich in Einschraubrichtung der Hydraulikschraube 77 anschließender, als Hydraulikreservoir 91 dienender Bereich. Die beiden Bereiche sind durch eine Schulter 93 voneinander abgesetzt, an welche die Dichthülse 89 anschlägt.

In ihrem den Hydraulikreservoir 91 zugewandten Bereich weist die Dichthülse 89 bevorzugt eine Dichtung 95 auf. Diese liegt - in Umfangsrichtung gesehen - dicht an einer Kolbenstange 97 der Hydraulikschraube 77 an, welche in das Hydraulikreservoir 91 hineinragt. Durch die Dichtung 95 ist der mit dem Innengewinde 85 in Eingriff stehende Bereich der Hydraulikschraube 77 gegenüber dem Hydraulikreservoir 91 abgedichtet.

Die Kolbenstange 97 ist mit einem Kolben 99 verbunden, der dicht an einer Innenwandung 101 des Hydraulikreservoirs 91 anliegt. Vorzugsweise weist der Kolben 99 eine Dichtung 103 auf, mit der er - in Umfangsrichtung gesehen - vollständig dichtend an der Innenwandung 101 anliegt. Auf diese Weise teilt der Kolben 99 das Hydraulikreservoir 91 in eine erste Kammer 105 und eine zweite Kammer 107. In beiden Kammern ist bevorzugt Hydrauliköl vorgesehen. Besonders bevorzugt sind beide Kammern 105, 107 mit Hydrauliköl gefüllt.

An ihrem der Gewindehülse 85 zugewandten Ende weist die Hydraulikschraube 77 bevorzugt einen Eingriff 109 für ein Betätigungswerkzeug auf. Beispielsweise kann eine Sechskantausnehmung für einen Inbusschlüssel als Eingriff 109 vorgesehen sein. Auch andere Betätigungswerkzeuge und entsprechend ausgestaltete Eingriffe sind möglich. Mithilfe eines in den Eingriff 109 eingreifenden Betätigungswerkzeugs kann die Hydraulikschraube 77 in die Ausnehmung 79 hineingedreht werden, wodurch sich das Volumen der ersten Kammer 105 vergrößert, wobei sich zugleich das Volumen der zweiten Kammer 107 verkleinert. Dabei wird aus der zweiten Kammer 107 Hydrauliköl ausgetrieben, während Hydrauliköl in die erste Kammer 105 strömt, wenn beide Kammern mit weiteren Hydraulikkammern oder -pfaden in Fluidverbindung stehen. Umgekehrt ist es möglich, die Hydraulikschraube 77 aus der Ausnehmung 79 herauszudrehen, wobei sich das Volumen der ersten Kammer 105 verkleinert, und sich das Volumen der zweiten Kammer 107 vergrößert. Entsprechend wird dann Hydrauliköl aus der ersten Kammer 105 ausgetrieben, während Hydrauliköl in die zweite Kammer 107 strömt.

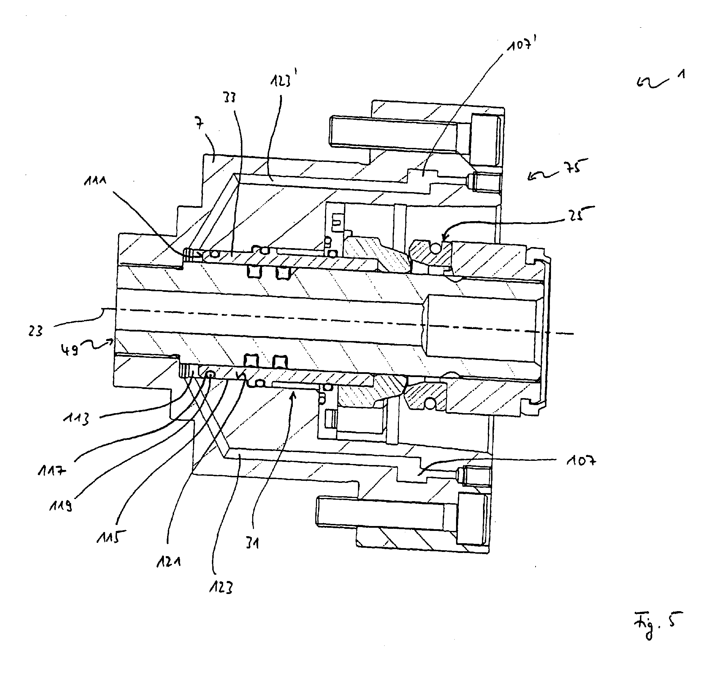

Figur 5 zeigt einen Längsschnitt durch das Ausführungsbeispiel einer Werkzeugaufnahme 1 gemäß Figur 3. Gleiche und funktionsgleiche Elemente sind mit gleichen Bezugszeichen versehen, sodass insofern auf die vorangegangene Beschreibung verwiesen wird. Auch hier wurden Bezugszeichen weggelassen, um die Übersichtlichkeit zu steigern. Anhand von Figur 5 wird die Funktionsweise der manuellen hydraulischen Aktiviervorrichtung 75 näher erläutert. Die Schiebehülse 33 weist bevorzugt eine erste hydraulische Wirkfläche 111 auf, die einer Hydraulikkammer 113 zugewandt ist. Dabei ist die Schiebehülse 33 in einer Ausnehmung 115 des Einbauflansches 7 oder des Grundkörpers angeordnet. Die Hydraulikkammer 113 umgreift den Spanndorn 49 vorzugsweise ringförmig und wird bevorzugt durch eine in einer Ringnut 117 der Schiebehülse angeordnete Dichtung 119, welche dichtend an einer inneren Umfangsfläche 121 der Ausnehmung 115 anliegt, begrenzt.

Die Hydraulikkammer 113 steht vorzugsweise über Kanäle 123, 123' mit den zweiten Kammern 107, 107' in Fluidverbindung. Werden also die Hydraulikschrauben 77, 77' in die Ausnehmungen 79, 79' eingeschraubt, wird Hydrauliköl aus den zweiten Kammern 107, 107' über die Kanäle 123, 123' in die Hydraulikkammer 113 geleitet. Der so erzeugte hydraulische Druck wirkt auf die hydraulische Wirkfläche 111, sodass die Schiebehülse 33 in Figur 5 nach rechts verlagert wird. Ein Eindrehen der Hydraulikschrauben 77, 77' bewirkt auf diese Weise eine Verlagerung der Betätigungsvorrichtung 31 und damit auch der Spannvorrichtung 25 in deren zweite Funktionsstellung. Ein hier nicht dargestellter Hohlkegelschaft kann somit eingespannt werden. Auch hier wird deutlich, dass ein Hohlschaftkegel dadurch eingespannt werden kann, dass die Betätigungsvorrichtung 31 in Figur 5 nach rechts verlagert wird. Das Spannen des Hohlschaftkegels wird also dadurch bewirkt, dass die Betätigungsvorrichtung 31 in Richtung auf den einzuspannenden Hohlschaftkegel hin geschoben wird.

Selbstverständlich ist es auch möglich, dass die Hydraulikkammer 113 über die Kanäle 123, 123' mit den ersten Kammern 105, 105' in Fluidverbindung steht. Es ergibt sich ohne Weiteres, dass in diesem Fall ein Herausdrehen der Hydraulikschrauben 77, 77' aus den Ausnehmungen 79, 79' eine Verlagerung der Betätigungsvorrichtung 31 und somit auch der Spannvorrichtung 25 in deren zweite Funktionsstellung bewirken würde.

Schließlich ist es auch möglich, dass eine hydraulische Aktiviervorrichtung nur eine Hydraulikschraube aufweist, wobei dann die Hydraulikkammer 113 auch nur über einen Kanal 123 mit einer Kammer in Fluidverbindung steht. Schließlich ist es auch möglich, dass mehr als zwei Hydraulikschrauben 77, 77' vorgesehen sind, wobei dann mehr als zwei Kanäle 123, 123' die Hydraulikkammer 113 mit den entsprechenden Kammern verbinden.

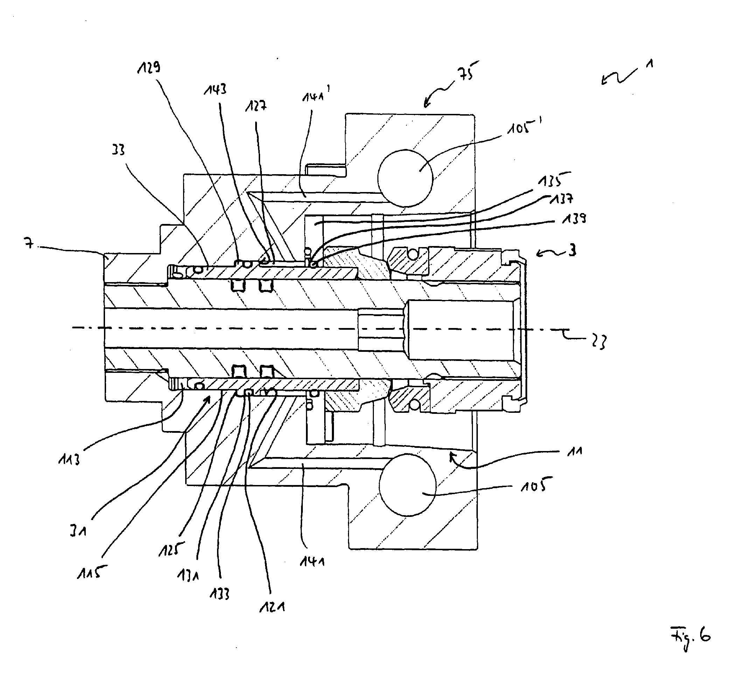

Figur 6 zeigt einen weiteren Längsschnitt durch die Werkzeugaufnahme 1 gemäß Figur 3. Gleiche und funktionsgleiche Elemente sind mit gleichen Bezugszeichen versehen, sodass insofern auf die vorangegangene Beschreibung verwiesen wird. Die Ausnehmung 115, in der die Schiebehülse 33 angeordnet ist, weist bevorzugt eine Stufe 125 auf, sodass die innere Umfangsfläche 121 der Ausnehmung 115 einen Bereich kleineren Durchmessers und einen Bereich größeren Durchmessers aufweist. Die erste Hydraulikkammer 113 ist in dem Bereich kleineren Durchmessers angeordnet. In dem Bereich größeren Durchmessers ist vorzugsweise eine zweite Hydraulikkammer 127 angeordnet. Auch diese umgreift bevorzugt die Schiebehülse 33 ringförmig. Die Schiebehülse 33 weist hier einen radialen Vorsprung 129 auf, der in der ersten Funktionsstellung der Betätigungsvorrichtung 31 an der Stufe 125 anschlägt und so eine Verlagerung der Betätigungsvorrichtung 31 in Figur 6 weiter nach links verhindert. In dem Vorsprung 129 ist bevorzugt - in Umfangsrichtung gesehen - eine Ringnut 131 vorgesehen, in der eine Dichtung 133 angeordnet ist. Der Vorsprung 129 beziehungsweise die Dichtung 133 begrenzt die Hydraulikkammer 127 zu der dem Aufnahmebereich 11 abgewandten Seite hin. Auf der dem Aufnahmebereich 11 zugewandten Seite wird die Hydraulikkammer 127 vorzugsweise durch eine Druckplatte 135 begrenzt. Diese weist hier ebenfalls eine Ringnut 137 auf, in der eine Dichtung 139 angeordnet ist, welche-in Umfangsrichtung gesehen - dicht an der Schiebehülse 33 anliegt.

Über Kanäle 141, 141' ist die zweite Hydraulikkammer 127 mit den ersten Kammern 105, 105' der Hydraulikreservoirs 91, 91' verbunden. Werden demnach die Hydraulikschrauben 77, 77' aus den Ausnehmungen 79, 79' herausgedreht, wird Hydrauliköl aus den Kammern 105, 105' über die Kanäle 141, 141' in die zweite Hydraulikkammer 127 gefördert. Der dort entstehende Druck wirkt auf eine zweite hydraulische Wirkfläche 143, die an dem Vorsprung 129 vorgesehen ist. Hierdurch wird die Schiebehülse 33 in Richtung der ersten Funktionsstellung der Betätigungsvorrichtung 31 gedrängt, sodass die Spanneinrichtung 3 letztlich gelöst wird.

Selbstverständlich ist es auch möglich, dass die Hydraulikkammer 127 über die Kanäle 141, 141' mit den zweiten Kammern 107, 107' in Verbindung steht, sodass in diesem Fall ein Einschrauben der Hydraulikschrauben 77, 77' in die Ausnehmungen 79, 79' ein Lösen der Spanneinrichtung 3 bewirkt. Schließlich ist es auch hier möglich, dass nur eine Hydraulikschraube oder auch mehr als zwei Hydraulikschrauben vorgesehen sind, die in entsprechender Fluidverbindung mit der zweiten Hydraulikkammer 127 stehen.

Das hier dargestellte Ausführungsbeispiel mit der manuellen hydraulischen Aktiviervorrichtung 75 hat den Vorteil, dass die so ausgestattete Spanneinrichtung 3 sehr kompakt aufgebaut sein kann. Insbesondere beansprucht sie nur einen sehr geringen Bauraum in axialer Richtung. Zugleich können jedoch auf einfache Weise große Kräfte aufgebaut werden, die zur Aktivierung der Betätigungsvorrichtung 31 zur Verfügung stehen.

Insgesamt zeigt sich, dass die hier vorgeschlagene Spanneinrichtung ein Werkzeug sicher und fest spannt und gespannt hält, selbst wenn starke radiale und insbesondere auch dynamische Kräfte während der Bearbeitung eines Werkstücks auf das Werkzeug einwirken. Eine Lockerung der Spanneinrichtung ist dabei quasi ausgeschlossen. Zugleich ist es möglich, einen zentralen Kanal zur Durchführung einer Antriebswelle oder zur Durchleitung von Kühl/Schmiermittel vorzusehen, welcher einen großen Durchmesser aufweist. Dabei ist eine reproduzierbare, dichte Anlage eines Werkzeugs an einem Festanschlag gewährleistet. Zugleich baut die vorgeschlagene Spanneinrichtung 3 insbesondere in axialer Richtung sehr kompakt, sodass möglicht wenig Bauraum beansprucht wird.

## Patentansprüche

1. Spanneinrichtung für Werkzeuge mit Hohlschaftkegel, mit
- einer Mittelachse (23);
- einer Spannvorrichtung (25), die in einer ersten Funktionsstellung derart radial in Richtung auf die Mittelachse (23) hin angeordnet ist, dass sie nicht mit einem in die Spanneinrichtung (3) eingesetzten Hohlschaftkegel (5) in Eingriff kommt, und die in einer zweiten Funktionsstellung zumindest bereichsweise derart radial von der Mittelachse (23) weg verlagert ist, dass ein in die Spanneinrichtung (3) eingesetzter Hohlschaftkegel (5) durch diese eingespannt wird;
- einer Betätigungsvorrichtung (31), die in Richtung der Mittelachse (23) verlagerbar ist, wobei sie derart mit der Spannvorrichtung (25) zusammenwirkt, dass diese von ihrer ersten in ihre zweite Funktionsstellung verlagerbar ist, und
- einem Spanndorn (49), der die Spannvorrichtung (25) bei deren Verlagerung von ihrer ersten Funktionsstellung in ihre zweite Funktionsstellung zumindest bereichsweise führt,
**dadurch gekennzeichnet, dass** der Spanndorn (49) in Richtung der Mittelachse (23) fixiert ist, so dass die Betätigungsvorrichtung (31) relativ zu dem Spanndorn (49) axial verlagerbar ist.

2. Spanneinrichtung nach Anspruch 1, **dadurch gekennzeichnet, dass** der Spanndorn (49) einen ersten Anschlag (51) aufweist, an dem die Spannvorrichtung (25) bei ihrer Verlagerung gleitet.

3. Spanneinrichtung nach Anspruch 2, **dadurch gekennzeichnet, dass** sich die Spannvorrichtung (25) in ihrer zweiten Funktionsstellung an dem ersten Anschlag (51)abstützt.

4. Spanneinrichtung nach einem der vorhergehenden Ansprüche, **dadurch gekennzeichnet, dass** die Spannvorrichtung (25) mindestens zwei Spannsegmente (27;27';27") umfasst.

5. Spanneinrichtung nach einem der vorhergehenden Ansprüche, **dadurch gekennzeichnet, dass** die Betätigungsvorrichtung (31) von einer ersten in eine zweite Funktionsstellung verlagerbar ist, wobei sie in ihrer ersten Funktionsstellung eine Verlagerung der Spannvorrichtung (25) in deren erste Funktionsstellung erlaubt, und in ihrer zweiten Funktionsstellung die Spannvorrichtung (25) in deren zweite Funktionsstellung drängt

6. Spanneinrichtung nach einem der vorhergehenden Ansprüche, **dadurch gekennzeichnet, dass** die Betätigungsvorrichtung (31) so ausgebildet und/oder angeordnet ist, dass sie die Spannvorrichtung (25) in deren zweite Funktionsstellung drängt, wenn sie in Richtung auf einen einzuspannenden Hohlschaftkegel hin verlagert wird.

7. Spanneinrichtung nach einem der vorhergehenden Ansprüche, **dadurch gekennzeichnet, dass** die Betätigungsvorrichtung (31) den Spanndorn (49) umgreift.

8. Spanneinrichtung nach einem der vorhergehenden Ansprüche, **dadurch gekennzeichnet, dass** die Betätigungsvorrichtung (31) mit der Spannvorrichtung (25) im Sinne eines Keilgetriebes zusammenwirkt.

9. Spanneinrichtung nach Anspruch 8, **dadurch gekennzeichnet, dass** die Betätigungsvorrichtung (31) eine erste Keilfläche (37) und eine zweite Keilfläche (39) aufweist, so dass sie mit der Spannvorrichtung (25) im Sinne eines zweistufigen Keilgetriebes zusammenwirkt.

10. Spanneinrichtung nach einem der vorhergehenden Ansprüche, **dadurch gekennzeichnet, dass** die Betätigungsvorrichtung (31) durch ein Keil- oder Schraubgetriebe, elektrisch oder hydraulisch, maschinell oder manuell aktivierbar ist.

11. Spanneinrichtung nach einem der vorhergehenden Ansprüche, **dadurch gekennzeichnet, dass** der Spanndorn (49) einen zentralen Kanal (61) aufweist, der mit einer Kühl-/Schmiermittelquelle in Fluidverbindung steht.

12. Spanneinrichtung nach Anspruch 11, **dadurch gekennzeichnet, dass** der Spanndorn (49) einen zweiten Anschlag (63) aufweist, mit dem ein eingespanntes Werkzeug fluiddicht in Eingriff bringbar ist, so dass eine Fluidverbindung von dem zentralen Kanal (61) zu einem Kühl-/Schmiermittelkanal des Werkzeugs herstellbar ist.

13. Spanneinrichtung nach Anspruch 12, **dadurch gekennzeichnet, dass** der Spanndorn (49) im Bereich des zweiten Anschlags (63) eine Dichtung (67) aufweist.

14. Spanneinrichtung nach einem der Ansprüche 12 oder 13, **dadurch gekennzeichnet, dass** der Spanndorn (49) einen radialen Vorsprung (69) aufweist, an dem der erste und der zweite Anschlag (51 ;63) vorgesehen sind.

15. Werkzeugaufnahme für einen Hohlschaftkegel aufweisende Werkzeuge, **gekennzeichnet durch** eine Spanneinrichtung nach einem der Ansprüche 1 bis 14.

## Claims

1. A clamping apparatus for tools comprising a hollow shank taper, comprising,
- a center axis (23);
- a clamping device (25), which, in a first functional position, is arranged radially towards the center axis (23) in such a way that the clamping device does not engage with a hollow shank taper (5), which is inserted into the clamping apparatus (3), and which, in a second functional position, is moved radially away from the center axis (23) at least area by area in such a way that a hollow shank taper (5), which is inserted into the clamping apparatus (3), is clamped in by the clamping apparatus (3);
- an actuating device (31), which can be moved in the direction of the center axis (23), wherein the actuating device interacts with the clamping device (25) in such a way that the clamping device can be moved from the first functional position thereof to the second functional position thereof, and
- a clamping mandrel (49), which guides the clamping device (25) in response to the movement thereof from the first functional position thereof to the second functional position thereof at least area by area,
**characterized in that** the clamping mandrel (49) is fixed in the direction of the center axis (23) so that the actuating device (31) can be moved axially relative to the clamping mandrel (49).

2. The clamping apparatus according to claim 1, **characterized in that** the clamping mandrel (49) encompasses a first stop (51), along which the clamping device (25) glides in response to the movement thereof.

3. The clamping apparatus according to claim 2, **characterized in that**, in the second functional position thereof, the clamping device (25) is supported on the first stop (51).

4. The clamping apparatus according to any one of the preceding claims, **characterized in that** the clamping device (25) comprises at least two clamping segments (27; 27'; 27").

5. The clamping apparatus according to any one of the preceding claims, **characterized in that** the actuating device (31) can be moved from a first functional position to a second functional position, wherein, in the first functional position thereof, the actuating device allows for a movement of the clamping device (25) in the first functional position thereof, and, in the second functional position thereof, the actuating device pushes the clamping device (25) in the second functional position thereof.

6. The clamping apparatus according to any one of the preceding claims, **characterized in that** the actuating device (31) is embodied and/or arranged in such a way that it pushes the clamping device (25) in the second functional position thereof, when it moves towards a hollow shank taper, which is to be clamped.

7. The clamping device according to any one of the preceding claims, **characterized in that** the actuating device (31) encompasses the clamping mandrel (49).

8. The clamping device according to any one of the preceding claims, **characterized in that** the actuating device (31) interacts with the clamping device (25) in terms of a wedge gear.

9. The clamping device according to claim 8, **characterized in that** the actuating device (31) encompasses a first wedge surface (37) and a second wedge surface (39), so that it interacts with the clamping device (25) in terms of a two-stage wedge gear.

10. The clamping apparatus according to any one of the preceding claims, **characterized in that** the actuating device (31) can be activated electrically or hydraulically, automatically or manually by means of a wedge or worm gear.

11. The clamping apparatus according to any one of the preceding claims, **characterized in that** the clamping mandrel (49) encompasses a central channel (61), which is in fluid connection with a coolant/lubricant source.

12. The clamping apparatus according to claim 11, **characterized in that** the clamping mandrel (49) encompasses a second stop (63), with which a clamped-in tool can be engaged in a fluid-tight manner, so that a fluid connection can be established from the central channel (61) to a coolant/lubricant channel of the tool.

13. The clamping apparatus according to claim 12, **characterized in that** the clamping mandrel (49) encompasses a seal (67) in the area of the second stop (63).

14. The clamping apparatus according to any one of claims 12 or 13, **characterized in that** the clamping mandrel (49) encompasses a radial projection (69), at which the first and the second stop (51; 63) are provided.

15. A tool accommodation for tools comprising a hollow shank taper, **characterized by** a clamping device according to any one of claims 1 to 14.

## Revendications

1. Installation de serrage pour outils avec cône creux HSK, comprenant
- un axe médian (23) ;
- un dispositif de serrage (25) qui est disposé dans une première position fonctionnelle radialement en direction de l'axe médian (23) de telle sorte qu'il ne s'engrène pas avec un cône creux HSK (5) inséré dans l'installation de serrage (3), et qui est déplacé dans une seconde position fonctionnelle au moins par région radialement à l'écart de l'axe médian (23) de telle sorte qu'un cône creux HSK (5) inséré dans l'installation de serrage (3) est serré par celle-ci ;
- un dispositif d'actionnement (31) qui peut être déplacé en direction de l'axe médian (23), dans laquelle il coopère avec le dispositif de serrage (25) de telle sort que celui-ci peut être déplacé de sa première dans sa seconde position fonctionnelle, et
- une broche de serrage (49) qui guide le dispositif de serrage (25) lors de son déplacement de sa première position fonctionnelle dans sa seconde position fonctionnelle au moins par région,
**caractérisée en ce que** la broche de serrage (49) est fixée en direction de l'axe médian (23) de sorte que le dispositif d'actionnement (31) peut être déplacé axialement par rapport à la broche de serrage (49).

2. installation de serrage selon la revendication 1, **caractérisée en ce que** la broche de serrage (49) présente une première butée (51) sur laquelle le dispositif de serrage (25) glisse lors de son déplacement.

3. installation de serrage selon la revendication 2, **caractérisée en ce que** le dispositif de serrage (25) s'appuie sur la première butée (51) dans sa seconde position fonctionnelle.

4. Installation de serrage selon une des revendications précédentes, **caractérisée en ce que** le dispositif de serrage (25) comprend au moins deux segments de serrage (27 ; 27' ; 27").

5. installation de serrage selon une des revendications précédentes, **caractérisée en ce que** le dispositif d'actionnement (31) peut être déplacé d'une première dans une seconde position fonctionnelle, dans laquelle il permet dans sa première position fonctionnelle un déplacement du dispositif de serrage (25) dans sa première position fonctionnelle, et pousse dans sa seconde position fonctionnelle le dispositif de serrage (25) dans sa seconde position fonctionnelle.

6. installation de serrage selon une des revendications précédentes, **caractérisée en ce que** le dispositif d'actionnement (31) est réalisé et/ou disposé de sorte qu'il pousse le dispositif de serrage (25) dans sa seconde position fonctionnelle lorsqu'il est déplacé en direction d'un cône creux HSK à serrer.

7. installation de serrage selon une des revendications précédentes, **caractérisée en ce que** le dispositif d'actionnement (31) enveloppe la broche de serrage (49).

8. installation de serrage selon une des revendications précédentes, **caractérisée en ce que** le dispositif d'actionnement (31) coopère avec le dispositif de serrage (25) au sens d'un engrenage à cale.

9. installation de serrage selon la revendication 8, **caractérisée en ce que** le dispositif d'actionnement (31) présente une première face de cale (37) et une seconde face de cale (39) de sorte qu'il coopère avec le dispositif de serrage (25) au sens d'un engrenage à cale à deux étages.

10. installation de serrage selon une des revendications précédentes, **caractérisée en ce que** le dispositif d'actionnement (31) peut être activé de manière électrique ou hydraulique, mécanique ou manuelle par un engrenage à cale ou hélicoïdal.

11. Installation de serrage selon une des revendications précédentes, **caractérisée en ce que** la broche de serrage (49) présente un canal central (61) qui est en connexion fluidique avec une source de réfrigérant/lubrifiant.

12. Installation de serrage selon la revendication 11, **caractérisée en ce que** la broche de serrage (49) présente une seconde butée (63) avec laquelle un outil serré peut être engrené de manière étanche au fluide de sorte qu'une connexion fluidique peut être réalisée du canal central (61) à un canal de réfrigérant/lubrifiant de l'outil.

13. Installation de serrage selon la revendication 12, **caractérisée en ce que** la broche de serrage (49) présente un joint (67) dans la région de la seconde butée (63).

14. installation de serrage selon une des revendications 12 ou 13, **caractérisée en ce que** la broche de serrage (49) présente une saillie radiale (69) sur laquelle la première et la seconde butée (51 ; 63) sont prévues.

15. Logement d'outil pour des outils présentant un cône creux HSK, **caractérisé par** une installation de serrage selon une des revendications 1 à 14.
